# EUROPÄISCHE PATENTSCHRIFT

(11) **EP 1 725 443 B1**
(45) Veröffentlichungstag und Bekanntmachung des Hinweises auf die Patenterteilung: **02.04.2008**
(21) Anmeldenummer: 05707312.4
(22) Anmeldetag: 10.02.2005
(51) Int. Cl.: B62D 29/04, B29C 70/78

(54) **FAHRZEUG FOLIENBAUTEIL UND VERFAHREN ZU DESSEN HERSTELLUNG**
VEHICLE FILM COMPONENT, AND METHOD FOR THE PRODUCTION THEREOF
COMPOSANT EN FEUILLE POUR VEHICULE AUTOMOBILE ET SON PROCEDE DE PRODUCTION

(30) Priorität: 15.03.2004 DE 102004012467
(43) Veröffentlichungstag der Anmeldung: 29.11.2006
(73) Patentinhaber: Daimler AG, 70327 Stuttgart (DE)
(72) Erfinder: KRÜGLER, Jan, 70182 Stuttgart (DE); VEEH, Margit, 89073 Ulm (DE)
(86) Internationale Anmeldenummer: PCT/EP2005/001344
(87) Internationale Veröffentlichungsnummer: WO 2005/095189

(56) Entgegenhaltungen:
- DE-A1- 10 230 030
- DE-A1- 19 956 930
- US-A1- 2002 135 203

## Beschreibung

Die Erfindung betrifft ein Fahrzeug-Folienbauteil und ein Verfahren zu dessen Herstellung gemäß den Oberbegriffen der Patentansprüche 1 und 2. Ein derartiges Bauteil und Verfahren sind bereits aus der DE 199 56 930 A1 bekannt. Aus der US 2002/135203 A1 ist ein Verfahren zur Herstellung eines Bauteils bekannt, bei dem eine transparente Kunststoffschicht durch eine Lack- oder Dekorfolie teilweise angespritzt wird, um eine C-Säule mit einem eingelassenen Fenster herzustellen.

In jüngerer Zeit werden vermehrt auch Außenbauteile von Fahrzeugen, insbesondere von Personenkraftwagen, zumindest teilweise aus Kunststoff hergestellt, da diese u.a. Vorteile bezüglich Gewicht und Korrosionsbeständigkeit bieten. Derartige Bauteile benötigen eine optisch ansprechende Oberfläche, weswegen beispielsweise in der DE 199 56 930 A1 vorgeschlagen wird, sie durch Hinterspritzen von Lackfolien herzustellen.

Eine größere Zahl derartiger Außenbauteile benötigt transparente Bereiche, z.B. die C-Säule oder die Rückwand mit eingelassenen Fenstern oder die Kassette, in der das Kennzeichen befestigt wird. Solche Bauteile werden zunächst ohne die transparenten Bereiche hergestellt und dann mit diesen zusammengefügt. Beispielsweise wird ein Bauteil gegossen, daraus die Kontur des transparenten Bereichs ausgestanzt und dann ein vorgefertigtes, dieser Kontur angepasstes transparentes Bauteil in diese Ausstanzung eingefügt und dort geklemmt, geschraubt oder geklebt. Diese Vorgehensweise ist aufgrund ihrer Mehrstufigkeit prozesstechnisch aufwendig und daher teuer. Darüber hinaus sind Fugen kaum zu vermeiden, woraus Probleme hinsichtlich der Dichtigkeit und der Korrosion sowie hinsichtlich der Designfreiheit resultieren.

Die Aufgabe der vorliegenden Erfindung besteht daher darin, ein Bauteil anzugeben, welches prozesstechnisch einfacher und fugenfrei herstellbar ist, sowie ein entsprechendes Verfahren zu dessen Herstellung.

Die Erfindung ist in Bezug auf das zu schaffende Bauteil und das Verfahren durch die Merkmale der Patentansprüche 1 und 2 wiedergegeben. Die weiteren Ansprüche enthalten vorteilhafte Ausgestaltungen und Weiterbildungen des erfindungsgemäßen Bauteils (Patentansprüche 3 bis 5).

Die Aufgabe wird bezüglich des zu schaffenden Verfahrens zur Herstellung eines Fahrzeug-Bauteils erfindungsgemäß durch die folgenden Verfahrensschritte gelöst:
- Bereitstellen einer Bauteil-Form,
- Anpassen einer Folie an die Form,
- Einlegen der Folie in die Form,
- zumindest teilweises Hinterfüllen der Folie in der Form mit mindestens einer Kunststoffschicht,
wobei
- mindestens ein Loch mit vorgegebener Kontur in die Folie vor deren Hinterfüllen eingebracht wird,
- das Hinterfüllen der Folie mit einem transparenten Kunststoff zumindest im Bereich des mindestens einen Loches erfolgt, derart, dass das Loch mit dem transparentem Kunststoff gefüllt wird.

Dieses Verfahren ist prozesstechnisch einfacher als der Stand der Technik, da die Formgebung des Bauteils und das Einbringen des transparenten Bereiches erfindungsgemäß in nur einem Schritt erfolgen während dazu bisher mehrere Schritte erforderlich waren.

Darüber hinaus bedingt das Einbringen des transparenten Kunststoffes hinter die Folie in der Form, dass der Kunststoff im Bereich des Lochs eine Außenwand des Bauteils darstellt, die gleichmäßig mit der Folie abschließt. Infolgedessen treten keine Fugen und die damit verbundenen Probleme hinsichtlich Dichtigkeit und Design auf.

Im Übrigen erhöht die erfindungsgemäß geschaffene Einstückigkeit die Stabilität des Bauteils gegenüber einem nachträglich geschaffenen Verbundbauteil.

Das Anpassen der Folie an die Form kann durch Beschneiden und Tiefziehen erfolgen. Je nach Elastizität der Folie - insbesondere in Abhängigkeit von der Temperatur des transparenten Kunststoffes während des Hinterfüllens - und den dreidimensionalen Abmessungen der Formtopologie kann aber auf das Tiefziehen auch verzichtet werden.

Das Loch kann durch Ausstanzen in die Folie eingebracht werden. Möglich ist aber auch ein Schneiden mit Klingen, Wasser- oder Laserstrahl.

Das Hinterfüllen der Folie mit dem Kunststoff kann durch Eingießen, insbesondere eines Kunstharzes, oder Hinterspritzen, zum Beispiel mit Polycarbonat, erfolgen.

In einer speziellen Ausgestaltung wird die Folie lediglich im Bereich des Lochs mit einem transparenten Kunststoff hinterfüllt und in anderen Bereichen mit einem oder mehreren anderen Kunstoffen, die andere mechanische, chemische oder optische Eigenschaften aufweisen.

Die Aufgabe wird bezüglich des zu schaffenden Bauteils erfindungsgemäß dadurch gelöst, dass es eine Lack- oder Dekorfolie und eine zumindest bereichsweise direkt an der Folie anhaftende (d.h. nicht geklemmt oder geschraubt oder mit zusätzlicher Klebstoff schicht befestigte) Kunststoffschicht aufweist, wobei die Folie zumindest ein Loch mit vorgegebener Kontur aufweiset und der Kunststoff transparent ist und im Bereich des Lochs eine Außenwand des Bauteils darstellt, die gleichmäßig mit der Folie abschließt.

Ein derartiges Bauteil weist die bereits bezüglich des Verfahrens genannten Vorteile auf.

Der transparente Kunststoff kann ein Duromer sein, insbesondere ein Kunstharz (z.B. Epoxid-Harz, Polyester-Harz, Phenol-Harz, Melamin-Harz) , oder auch ein Thermoplast, insbesondere PMMA, PC, SAN, PET, PBT. Diese transparenten Kunststoffe weisen ein für nahezu beliebige Anwendungen ausreichendes Spektrum an mechanischen, chemischen, optischen und haptischen Eigenschaften auf.

Gemäß einer bevorzugten Ausgestaltung des Bauteils ist der Kunststoff elektrochrom, insbesondere enthält er Polyanilin. Ein weiterer geeigneter elektrochromer Kunststoff ist Polymeta-Toluidin.

Derartige Kunststoffe weisen den Vorteil auf, dass ihre Farbe, insbesondere ihre Transparenz, durch das Anlegen einer Spannung verändert werden kann. Dies erlaubt es, Fenster aus diesem Kunststoff in einem erfindungsgemäßen Bauteil auf Knopfdruck durch Anlegen einer Spannung zu verschließen.

In einer weiteren vorteilhaften Ausgestaltung des erfindungsgemäßen Bauteils sind in das Bauteil, insbesondere in den transparenten Kunststoff, Funktionsmittel, insbesondere Beleuchtungsmittel (z.B. Dioden), eingebettet. Durch diese Einbettung sind die Funktionsmittel vor Umwelteinflüssen, insbesondere mechanischer und chemischer Art, weitestgehend geschützt.

Nachfolgend werden anhand eines Ausführungsbeispiels das erfindungsgemäße Verfahren und Bauteil näher erläutert:

Gemäß einem ersten Ausführungsbeispiel wird eine Seitenmarkierungsleuchte hergestellt. Dazu wird zuerst eine geeignete Spritzgussform angefertigt und bereitgestellt. Die Spritzgussform weist annähernd die Form eines halben Eis auf.

Eine schwarze Lackfolie wird derart beschnitten, dass ihre Außenabmessungen dem Längsdurchmesser der Spritzgussform entsprechen. Dann wird in ihrem Inneren eine Eiform ausgestanzt, so dass ein eiförmiger Ring zurückbleibt, der in die Spritzgussform eingelegt wird.

Außerdem werden Funktionsmittel - hier mehrere Leuchtdioden mit ihren zugehörigen Anschlüssen - in die Spritzgussform eingebracht.

Danach wird die Lackfolie in der geschlossenen Spritzgussform mit heißem, flüssigem, transparentem Polycarbonat hinterspritzt, derart, dass das Loch mit dem transparentem Polycarbonat gefüllt wird.

Das Einbringen des heißen Polycarbonats hinter die Folie erwärmt diese und erhöht deren Elastizität, so dass sie sich vollständig der Kontur der Form anpassen kann. Der Rest des Formhohlraums, insbesondere das Loch in der Folie, wird von dem flüssigen Polycarbonat vollständig ausgefüllt, derart, dass das Polycarbonat nach seinem Erkalten im Bereich des Lochs eine stabile transparente Außenwand des Bauteils darstellt, die gleichmäßig mit der Folie abschließt. Infolgedessen treten keine Fugen und die damit verbundenen Probleme hinsichtlich Dichtigkeit und Design auf. Im Übrigen erhöht die erfindungsgemäß geschaffene Einstückigkeit die Stabilität des Bauteils gegenüber einem nachträglich geschaffenen Verbundbauteil.

Durch die Einbettung sind die Dioden als Beleuchtungsmittel vor Umwelteinflüssen, insbesondere mechanischer und chemischer Art, weitestgehend geschützt.

Das erfindungsgemäße Verfahren und Bauteil erweisen sich in der Ausführungsform des vorstehend beschriebenen Beispiels als besonders geeignet für die Herstellung von Fahrzeug-Folienbauteilen, die transparente Bereiche enthalten, insbesondere für solche Bauteile, die in der Automobilindustrie benötigt werden.

Einerseits können so erhebliche Vorteile bezüglich der Prozesszeit erzielt werden. Aber auch der Korrosionsschutz und die Designfreiheit können durch die Einstückigkeit verbessert werden.

Die Erfindung ist nicht nur auf das zuvor geschilderte Ausführungsbeispiel beschränkt, sondern vielmehr auf weitere übertragbar.

So ist zum Beispiel denkbar, dass die Folie selbst transparent ist, aber beispielsweise einen anderen Farbton oder auch andere mechanische oder chemische Eigenschaften aufweist als der transparente Kunststoff.

## Patentansprüche

1. Verfahren zur Herstellung eines Fahrzeug-Bauteils mit den Schritten
- Bereitstellen einer Bauteil-Form,
- Anpassen einer Folie an die Form,
- Einlegen der Folie in die Form,
- zumindest teilweises Hinterfüllen der Folie in der Form mit mindestens einer Kunststoffschicht,
**dadurch gekennzeichnet,**
- **dass** mindestens ein Loch mit vorgegebener Kontur in die Folie vor deren Hinterfüllen eingebracht wird,
- **dass** das Hinterfüllen der Folie mit einem transparenten Kunststoff zumindest im Bereich des mindestens einen Loches erfolgt, derart dass das Loch mit dem transparentem Kunststoff gefüllt wird.

2. Fahrzeug-Bauteil aufweisend
- eine Lack- oder Dekorfolie,
- eine zumindest bereichsweise direkt an der Folie anhaftende Kunststoffschicht,
**dadurch gekennzeichnet,**
- **dass** die Folie zumindest ein Loch mit vorgegebener Kontur aufweist,
- **dass** der Kunststoff transparent ist und im Bereich des Lochs eine Außenwand des Bauteils darstellt, die gleichmäßig mit der Folie abschließt.

3. Bauteil nach Anspruch 2,
**dadurch gekennzeichnet,**
**dass** der Kunststoff ein Duromer ist, insbesondere ein Kunstharz, oder
**dass** der Kunststoff ein Thermoplast ist, insbesondere PMMA, PC oder SAN.

4. Bauteil nach einem der vorhergehenden Ansprüche 2 oder 3,
**dadurch gekennzeichnet,**
**dass** der Kunststoff elektrochrom ist, insbesondere Polyanilin enthält.

5. Bauteil nach einem der vorhergehenden Ansprüche 2 bis 4,
**dadurch gekennzeichnet,**
**dass** in es Funktionsmittel, insbesondere Beleuchtungsmittel, eingebettet sind.

## Claims

1. Method for producing a vehicle component with the steps of
- providing a component mould,
- adapting a film to the mould,
- placing the film in the mould,
- at least partially backfilling the film in the mould with at least one layer of plastic,
**characterized**
- **in that** at least one hole with a predetermined contour is introduced into the film before its backfilling,
- **in that** the backfilling of the film is performed with a transparent plastic at least in the region of the at least one hole in such a way that the hole is filled with the transparent plastic.

2. Vehicle component comprising
- a lacquer film or decorative film,
- a layer of plastic adhering at least in certain regions directly to the film,
**characterized**
- **in that** the film has at least one hole with a predetermined contour,
- **in that** the plastic is transparent and in the region of the hole represents an outer wall of the component which finishes flush with the film.

3. Component according to Claim 2,
**characterized**
**in that** the plastic is a thermoset, in particular a synthetic resin, or
**in that** the plastic is a thermoplastic, in particular PMMA, PC or SAN.

4. Component according to one of the preceding Claims 2 or 3,
**characterized**
**in that** the plastic is electrochromic, in particular polyaniline.

5. Component according to one of the preceding Claims 2 to 4, **characterized in that** functional means, in particular lighting means, are embedded in it.

## Revendications

1. Procédé de fabrication d'un composant de véhicule, comprenant les étapes suivantes:
- préparer un moule du composant,
- adapter une feuille au moule,
- poser la feuille dans le moule,
- remplir au moins partiellement le moule derrière la feuille avec au moins une couche de matière plastique,
**caractérisé**
- **en ce que** l'on pratique au moins un trou avec un contour prédéterminé dans la feuille avant le remplissage arrière, et
- **en ce que** l'on effectue le remplissage derrière la feuille avec une matière plastique transparente au moins dans la région de l'au moins un trou, de telle manière que le trou soit rempli avec la matière plastique transparente.

2. Composant de véhicule, comprenant
- une feuille de laque ou de décoration,
- une couche de matière plastique adhérant au moins localement directement à la feuille,
**caractérisé**
- **en ce que** la feuille présente au moins un trou avec un contour prédéterminé, et
- **en ce que** la matière plastique est transparente et représente dans la région du trou une paroi extérieure du composant, qui se complète uniformément avec la feuille.

3. Composant selon la revendication 2, **caractérisé en ce que** la matière plastique est un duromère, en particulier une résine synthétique, ou **en ce que** la matière plastique est un thermoplastique, en particulier PMMA, PC ou SAN.

4. Composant selon l'une quelconque des revendications 2 ou 3, **caractérisé en ce que** la matière plastique est électrochrome, et contient notamment de la polyaniline.

5. Composant selon l'une quelconque des revendications 2 à 4, **caractérisé en ce que** des moyens fonctionnels, en particulier des moyens d'éclairage, y sont noyés.
